Europäisches Patentamt

**European Patent Office**

**Office européen des brevets**

(11) Veröffentlichungsnummer: **0 058 730**
**B1**

(12) **EUROPÄISCHE PATENTSCHRIFT**

(45) Veröffentlichungstag der Patentschrift:
**12.12.84**

(21) Anmeldenummer: **81101198.0**

(22) Anmeldetag: **20.02.81**

(51) Int. Cl.³: **B 07 B 1/46,** B 05 D 1/38,
B 05 D 1/32, B 05 C 9/08,
B 05 C 9/10

(54) **Verfahren zum Beschichten von Elementen sowie danach hergestelltes Siebelement.**

(43) Veröffentlichungstag der Anmeldung:
**01.09.82 Patentblatt 82/35**

(45) Bekanntmachung des Hinweises auf die Patenterteilung:
**12.12.84 Patentblatt 84/50**

(84) Benannte Vertragsstaaten:
**BE FR GB IT NL**

(56) Entgegenhaltungen:
**DE - C - 662 191**
**FR - A - 2 138 827**
**US - A - 3 557 276**
**US - A - 4 115 507**

(73) Patentinhaber: **Hein, Lehmann Aktiengesellschaft,**
**Fichtenstrasse 75, D-4000 Düsseldorf 1 (DE)**

(72) Erfinder: **Schmidt, Gerhard, Eichenweg 15,**
**D-7505 Ettlingen (DE)**

(74) Vertreter: **Patentanwaltsbüro Cohausz & Florack,**
**Postfach 14 01 47, D-4000 Düsseldorf 1 (DE)**

## Beschreibung

Die Erfindung betrifft ein Verfahren und eine Vorrichtung zum Beschichten von Elementen sowie ein danach hergestelltes Siebelement mit einer Vielzahl von Öffnungen zum Sortieren, Klassieren und/oder Trennen von Gütern bei dem auf eine Oberfläche des Elements, die zuvor gereinigt wird, zunächst ein Haftvermittler und danach ein Schutzmittel in einer oder in mehreren Schichten aufgetragen wird, wobei die Öffnungen durch Formstücke verschlossen werden, wobei erst nach dem Auftragen des Haftvermittlers die Öffnungen des Elements durch die Formstücke derart verschlossen werden, daß die Formstücke von der der zu schützenden Arbeitsfläche gegenüberliegenden Seite des Elements her die Öffnungen des Elements durchdringend eingesetzt werden, daß das Schutzmittel nur auf die zu schützende Arbeitsfläche des Elements und in einer geringeren Dicke als es der überstehenden Höhe der Formstücke entspricht, aufgetragen wird. Dieses Verfahren ist aus der US-A-4 115 507 bekannt.

Ein solches Verfahren dient dazu, Elemente mit einer Schutzschicht zu überziehen, um dadurch die Korrosion zu verringern. Es findet daher vielfach Verwendung um Siebböden, Siebmulden und Zentrifugenkörbe aus geschweißten oder geschlungenen Spaltsieb-Profildrähten vor Verschleiß zu schützen.

Aus der DE-AS 2 526 185 ist ein Verfahren zum Pulverbeschichten von Werkstücken bekannt. Dabei werden Bohrungen, Gewindelöcher und dgl. vor einer wäßrigen Vorbehandlung abgedeckt bzw. ausgestopft. Die dazu verwendeten Stopfen, Schläuche oder Schrauben werden dabei von der zu beschichtenden Oberfläche her eingebracht. Die Dicke der aufgebrachten Beschichtung ist vergleichsweise gering.

Die Dichtteile müssen nach dem Beschichten nach oben heraus wieder entfernt werden. Dabei kann es zumindest im nahen Lochbereich verstärkt zum Abheben oder Einreißen der Beschichtung kommen. Dies tritt noch verstärkt deshalb auf, da an den ebenfalls vorbehandelten Oberflächen der Dichtteile die Beschichtung in gleicher Weise haftet und aufgebracht ist, wie auf der Oberfläche des Elements. Mit zunehmender Dicke der Beschichtung würde diese Tendenz noch verstärkt werden. Außerdem finden häufig Dichtteile Verwendung, deren über die zu beschichtende Oberfläche hervorstehende Kopf einen größeren Durchmesser besitzt, als der in der Öffnung sitzende Fuß. Hat das zu beschichtende Element aber eine Vielzahl von Öffnungen, so wird das Aufbringen der Beschichtung wesentlich beeinträchtigt, da der freie Zutritt zu der zu beschichtenden Oberfläche eingeengt wird. Außerdem ist zu befürchten, daß die Dichtteile, insbesondere wenn sie wie vorgeschlagen in die Öffnungen gepreßt werden, in Durchtrittsrichtung der Öffnungen gesehen, wenn auch nur kleine Absätze oder Stufen verursachen. Ein solches Element wäre zum Klassieren und/oder Trennen von Gütern ungeeignet, da sich dort sofort Ablagerungen bilden, die die Öffnungen sehr schnell verstopfen würden.

Im übrigen fehlt es der DE-AS 2 526 185 an jeglichem Hinweis darauf, wie eine gewünschte und reproduzierbare Lochgeometrie der Öffnungen im Bereich der Beschichtung erreicht werden könnte. Es geht bei dem darin beschriebenen Verfahren nur darum, ein Eindringen von Beschichtungsmaterial in die Öffnungen zu verhindern.

Bei einem anderen bekannten Verfahren wird das entsprechend vorbehandelte Element in das flüssige Schutzmittel getaucht und das erstarrende Schutzmittel bildet einen Überzug. Dies hat aber bei Elementen mit einer Vielzahl von Öffnungen dazu geführt, daß die Öffnungen, vor allem bei größeren Schichtdicken und/oder wenn sie nur geringe Durchmesser besaßen, zusetzten. Auch war es nur schwer möglich, nach dem Beschichten Öffnungen genau vorgegebener Größen zu erhalten.

Man ist deshalb gänzlich von solchen Beschichtungsverfahren abgegangen und fertigt die Siebböden, Siebmulden oder Zentrifugenkörbe vollständig aus flexiblem Material, z. B. Polyurethan. Trotz der dabei verwendeten Armierungen mußten, um die erforderliche Biegesteifigkeit zu erreichen, die Stege zwischen den Öffnungen verbreitet werden, was eine nachteilige Verringerung der offenen Siebfläche mit sich brachte.

Aus der US-A 4 115 507 ist es bekannt, die Öffnungen eines Siebes durch Formstücke zu verschließen, während das Sieb beschichtet wird. Die Formstücke entsprechen hierbei exakt der Form der Öffnungen, so daß die Herstellung der Formstücke aufgrund der erforderlichen Genauigkeit aufwendig ist. Auch müssen die Formstücke sehr genau in die Öffnungen eingeführt werden. Ferner können nach der Beschichtung die Formstücke in den Öffnungen festklemmen, so daß sie schwer zu entfernen sind.

Aufgabe der Erfindung ist es, ein Verfahren der eingangs genannten Art derart zu verbessern, daß die Öffnungen des Elements sicher abgedichtet und die Formstücke leicht entfernbar sind.

Diese Aufgabe wird erfindungsgemäß dadurch gelöst, daß jeweils der Neigungswinkel der in der zugehörigen Öffnung des Elements zur Anlage gelangenden Formfläche größer ist als derjenige der die Öffnung begrenzenden Elementfläche, wobei die Formfläche linienförmig abdichtend an der Oberkante der Öffnung zur Anlage kommt.

Damit ist ein einfach durchführbares Verfahren geschaffen, mit dessen Hilfe tragfähige und biegesteife Elemente für das Klassieren und/oder Trennen von Gütern beschichtet werden können, obwohl die Elemente eine Vielzahl von Öffnungen und eine große offene Fläche besitzen. Die Beschichtung haftet dabei nicht oder nur in geringem Umfang an den betroffenen Oberflächen der Formstücke. Da die Formstücke darüber hinaus zur unbeschichteten Rückseite hin wieder herausgezogen werden können, werden die Rändern der Öffnungen im Bereich der Beschichtung nicht mehr beschädigt oder sonst nachteilig beeinträchtigt. Die aufgetragene Schichtdicke ist innerhalb weiter Grenzen wählbar. Die Öffnungen können reproduzierbar mit vorgegebener Geometrie freigehalten werden.

Auch kann verhindert werden, daß das Schutzmittel während des Auftragens oder während es noch nicht erstarrt, abgebunden oder vernetzt ist, unkontrolliert in die Öffnungen des Elements eindringt. Die Formstücke können dann leichter entfernt werden. Die Öffnungen des Elements werden nicht unnötig und unkontrollierbar verringert.

Mit besonderem Vorteil kann nunmehr das Schutzmittel in einer Dicke von mindestens 1 mm, vorzugsweise in einer Dicke von mindestens 2,5 mm, aufgetragen werden. Dadurch kann eine Schutzschicht geschaffen werden, die ein großes Absorptionsvermögen gegenüber stoßartiger Belastung besitzt. Zugleich werden die auftretenden Spannungsspitzen reduziert, was zu geringerem Abrieb und damit zu besseren Standzeiten führt. Häufig ist es günstig, die Schutzschicht 4 mm oder noch stärker auszubilden.

Zur Durchführung des erfindungsgemäßen Verfahrens mit einer Vorrichtung mit Formstükken, die den Öffnungen des Elements angepaßt sind, hat es sich als besonders vorteilhaft erwiesen, wenn die Formstücke eine kegelige, pyramidenförmige oder satteldachähnliche Gestalt besitzen.

Um eine glatte freie Oberfläche des zur Schutzschicht gewordenen Schutzmittels erzielen zu können, sind die die Öffnungen des Elements durchdringenden Enden der Formstücke scharfkantig spitz ausgebildet. Zugleich wird dadurch das Herausnehmen der Formstücke vereinfacht.

Gut geeignete und häufig wiederverwendbare Formstücke bestehen aus elastischem, form- und bis mindestens 90° C temperaturbeständigem Kunststoff, z. B. einem Polyurethan oder Silikonkautschuk. Das Polyurethan kann von sich aus gegenüber dem Schutzmittel abweisend sein und/oder die Formstücke müssen vor dem Auftragen des Schutzmittels mit einem Trennmittel behandelt werden.

Eine leicht zu handhabende Vorrichtung ist dann gegeben, wenn die Formstücke zu ein- und/oder mehrstückigen zahnstangenähnlichen Leisten zusammengefaßt sind. Dies gilt insbesondere für satteldachähnliche Formstücke bei spaltförmigen Öffnungen in dem Element.

Es erweist sich als vorteilhaft, wenn eine erfindungsgemäße Vorrichtung einen teilbaren Formrahmen mit Formstegen aufweist, der am Element eng anliegt und dieses überragt.

Die Formstücke bzw. die Leisten können leichter wieder entfernt werden, wenn sie an ihren Seitenflächen und/oder Unterseiten Aussparungen, insbesondere schwalbenschwanzförmige, hinterschnittene Nuten aufweisen.

Ein erfindungsgemäßes Verfahren eignet sich ganz besonders zur Herstellung von Siebelementen, insbesondere von Siebböden, bei denen das zu schützende Element eine Vielzahl von parallel verlaufenden, Spalten zwischen sich bildenden Profildrähten oder -stäben mit trapezähnlichem Querschnitt aufweist, die über Querstege miteinander verbunden, insbesondere verschweißt sind.

Anhand der in der Zeichnung schematisch dargestellten Ausführungsbeispiele wird im folgenden die Erfindung näher erläutert. Es zeigt

Fig. 1 Arbeitsschritte eines erfindungsgemäßen Verfahrens,

Fig. 2 eine erste Seitenansicht einer erfindungsgemäßen Vorrichtung im Schnitt,

Fig. 3 eine zweite Seitenansicht der gleichen Vorrichtung im Schnitt und

Fig. 4 ein vergrößertes Detail der Vorrichtung im Schnitt.

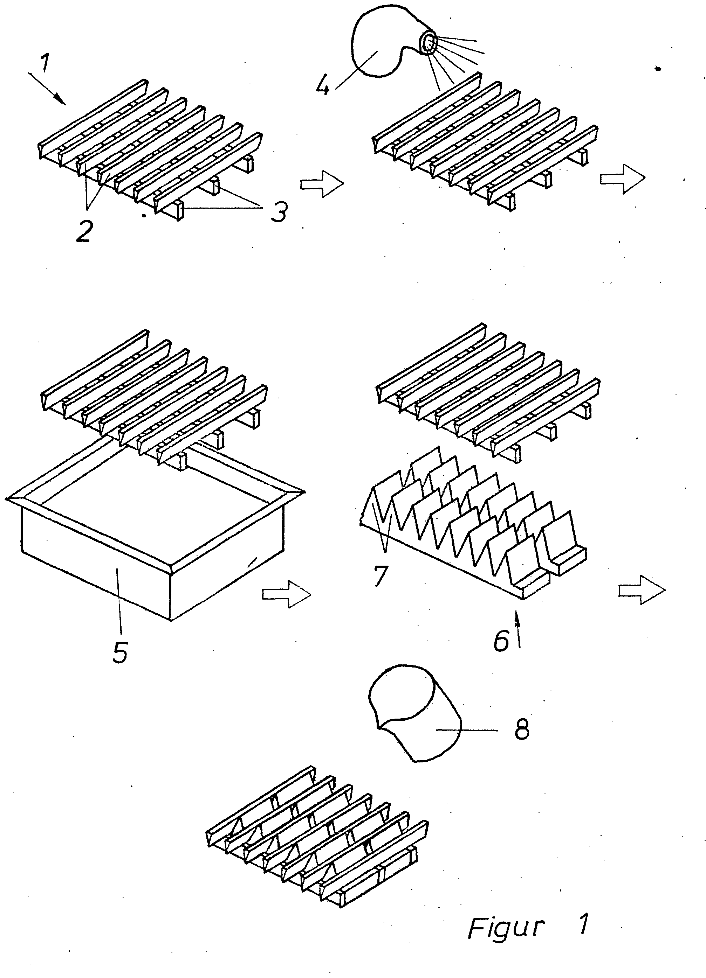

In Fig. 1 sind die wesentlichen Arbeitsschritte eines erfindungsgemäßen Verfahrens zum Beschichten eines Elements, das eine Vielzahl von Öffnungen aufweist, die eine große offene Fläche ergeben, gezeigt. Zunächst wird das Element 1 hergestellt. Das rostähnliche Element, ein sogenanntes Schweißspaltsieb, entsteht aus einer großen Anzahl von parallel verlaufenden, Öffnungen, beispielsweise Spalten, zwischen sich bildenden Profildrähten 2, die über rechtwinklig dazu angeordnete Querstege 3 miteinander verschweißt werden. Die Profildrähte 2 haben einen trapezähnlichen Querschnitt und bestehen ebenso wie die Querstege 3 auf rostfreiem Stahl. Sie brauchen nur für die Tragfähigkeit und nicht für den Verschleiß dimensioniert werden. Die Spalten müssen mit hoher Genauigkeit gefertigt werden, ansonsten entstehen unnötige Schwierigkeiten, wenn Öffnungen mit gewünschter Geometrie in einfacher Weise erzielt werden sollen. Das fertige Element 1 wird gereinigt und aufgerauht, z. B. mittels Sandstrahlen 4 und mit einem geeigneten Haftvermittler 5 für eine dauerhafte Verbindung zwischen dem Element und Schutzmittel behandelt. Dazu kann das Element mit dem Haftvermittler 5 versprüht oder in diesen eingetaucht werden. Danach werden die zu einer zahnstangenähnlichen Leiste zusammengefaßten satteldachförmigen Formstücke 7 von der der zu schützenden Arbeitsfläche gegenüberliegenden Seite des Elements her eingesetzt. Die Formstücke 7 durchdringen die Spalten vollständig und ragen über die zu schützende Fläche hervor. Sie sind zwischen den Querstegen 3 eingeführt und haben eine Breite, die dem Abstand der Querstege entspricht.

Schließlich wird das Schutzmittel, insbesondere ein schnell vernetzendes Polyurethan in einer geringeren Dicke als es der überstehenden Höhe der Formstücke entspricht so aufgetragen, daß eine Schutzschicht 8 mit zumindest annähernd glatter Oberfläche und mit einer Dicke von 4 mm oder mehr entsteht. Ist aus dem Schutzmittel eine formbeständige Schutzschicht 8 entstanden, werden die Leisten 6 wieder entfernt. Ein beschichtetes Element eignet sich ganz besonders zum Einsatz in Sieb- oder Filteranlagen, z. B. als Siebboden, Siebmulde oder Zentrifugenkorb.

Mit Hilfe des erfindungsgemäßen Verfahrens ist es in einfacher Weise möglich, ebene oder gekrümmte Elemente, die eine große offene Fläche besitzen, zu beschichten. Auch ein nachträgliches Beschichten von Elementen ist möglich, ohne daß diese eigens ausgebaut werden müssen. Das Schutzmittel kann in vergleichsweise großer Dicke aufgetragen werden. Die Abmessungen der nach dem Beschichten gegebenen Öffnungen können leicht dem beabsichtigten Verwendungszweck der Elemente angepaßt werden. Es ist dabei nicht mehr erforderlich, für jede Öffnungsgröße ein anderes Element oder andere Formstücke bzw. Leisten zu benutzen. Vielmehr können mit wenigen Grundtypen von Elementen und Formstücken bzw. Leisten die unterschiedlichsten Öffnungsgeometrien erzielt werden. Dazu braucht lediglich die Dicke der Schutzschicht entsprechend variiert werden. Je größer die Dicke gewählt wird, desto kleiner werden infolge der kegeligen, pyramidenförmigen oder satteldachähnlichen Formstücke die fertigen Öffnungen. Die nicht mehr nach dem Verschleiß zu dimensionierenden Profildrähte können kosten- und gewichtssparend dünner ausgelegt werden. Die Öffnungen sind durchgehend konisch und besitzen daher einen geringen Durchgangswiderstand.

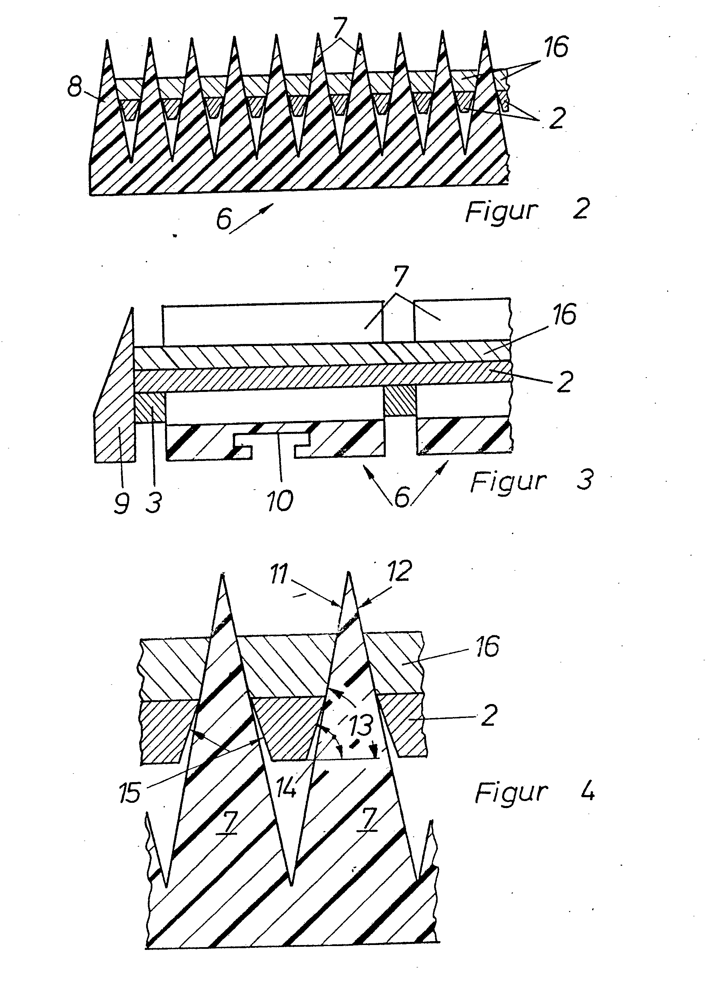

In Fig. 2 ist eine erste Seitenansicht einer Vorrichtung zur Durchführung des Verfahrens im Schnitt gezeigt. Die Vorrichtung weist Formstücke 7 auf, die zu einer einstückigen zahnstangenförmigen Leiste 6 zusammengefaßt sind. Die Leiste besteht aus elastischem, form- und bis mindestens 90°C temperaturbeständigem Kunststoff oder Silikonkautschuk. Sie kann leicht wieder entfernt werden und ist mehrfach verwendbar. Die hintereinander aufgereihten Formstücke 7 sind übereinstimmend mit der Teilung bzw. dem Mittenabstand der Spalten des zu beschichtenden Elements parallel zueinander angeordnet und besitzen satteldachähnliche Gestalt. Ein zusätzliches Formstück 8 bildet den Abschluß und erspart in diesem Bereich einen sonst erforderlichen Formsteg eines Formrahmens. Das zu beschichtende Element besteht wiederum aus verschweißten Profildrähten 2 und rechtwinklig dazu verlaufenden Querstegen 3. Der zwischen den Profildrähten 2 gebildete Spalt ist wesentlich größer als die Öffnungsweite des endgültig erzielten Spalts. Die Größe der Öffnung des endgültigen Spalts kann durch unterschiedliche Dicke der Schutzschicht 16 variiert werden. Die Leiste ist von der der zu schützenden Arbeitsfläche gegenüberliegenden Seite des Elements her eingesetzt. Die die Öffnungen des Elements durchdringenden Enden der Formstücke 7 laufen scharfkantig spitz aus.

In Fig. 3 ist die um 90° gegenüber der Fig. 2 gedrehte Seitenansicht der gleichen Vorrichtung im Schnitt dargestellt. Die Breite der Leiste ist dem Abstand der Querelemente angepaßt. Die den Querelementen zugewandten Seitenflächen der Formstücke bzw. der Leisten sind im wesentlichen senkrecht zur Oberfläche des Elements ausgebildet. Am Rande des Elements, wo die Formstücke keinen seitlich überstehenden Abschluß bilden, ist bündig anliegend ein Formsteg 9 eines Formrahmens angeordnet. Die überstehende Querkante des Formsteges 9 läuft ebenfalls scharfkantig spitz zu. Jeweils an der Unterseite der Leiste 6 ist eine schwalbenschwanzförmige in Längserstreckung der Leisten verlaufende Nut 10 vorgesehen. Die Nut 10 erleichtert einerseits das Einschieben der Leisten 6 und ermöglicht zugleich in Zusammenwirken mit einem geeigneten Werkzeug ein einfaches Entformen. Die Leisten 6 können jeweils von ihrer schmäleren Stirnseite her ähnlich wie ein Klebstreifen abgezogen werden.

In Fig. 4 ist ein vergrößertes Detail der Vorrichtung nach den Fig. 2 und 3 im Schnitt gezeigt. Das Formstück 7 besitzt eine satteldachförmige Gestalt und wird im wesentlichen durch zwei zueinander geneigte Formflächen 11, 12 und eine Unterseite gebildet, die im Querschnitt durchgehend ein gleichschenkliges spitzenwinkliges Dreieck ergeben. Der Neigungswinkel 13, der in der zugehörigen Öffnung zur Anlage gelangenden Formfläche 11 ist größer als derjenige 14, der die Öffnung innerhalb des Elements begrenzenden Elementfläche 15. Dadurch dichtet die Formfläche 11 in Zusammenwirken mit der Elementfläche 15 die Öffnung in diesem Bereich vollkommen ab. Das während des Auftragens flüssige bzw. fließfähige Schutzmittel kann nicht in die Öffnung des Elements eintreten. Dadurch entstehen nur Öffnungen mit der gewünschten Geometrie. Auch können die Leisten dann leichter entfernt werden. Geringe Teilungs- und Fertigungsabweichungen bei den Elementen und den Leisten bzw. Formstücken können dadurch ebenfalls ausgeglichen werden. Die Dicke der Schutzschicht 16 beträgt mindestens 4 mm.

**Patentansprüche**

1. Verfahren zum Beschichten von Elementen mit einer Vielzahl von Öffnungen zum Sortieren, Klassieren und/oder Trennen von Gütern, bei dem auf eine Oberfläche des Elements, die zuvor gereinigt wird, zunächst ein Haftvermittler und danach ein Schutzmittel in einer oder in mehreren Schichten aufgetragen wird, wobei die Öffnungen durch Formstücke verschlossen werden, wobei erst nach dem Auftragen des Haftvermittlers die Öffnungen des Elements (1) durch die Formstücke (7) derart verschlossen werden, daß die Formstücke von der der zu schützenden Arbeitsfläche gegenüberliegenden Seite des Elements her die Öffnungen des Elements durchdringend eingesetzt werden, daß das Schutzmittel nur auf die zu schützende Arbeitsfläche des Elements (1) und in einer geringeren Dicke als es der überstehenden Höhe der Formstücke (7) entspricht, aufgetragen wird, dadurch gekennzeichnet, daß jeweils der Neigungswinkel (13) der in der zugehörigen Öffnung des Elements (1) zur Anlage gelangenden Formfläche (11, 12) größer ist als derjenige (14) der die Öffnung begrenzenden Elementfläche (15), wobei die Formfläche (11, 12) linienförmig abdichtend an der Oberkante der Öffnung zur Anlage kommt.

2. Verfahren nach Anspruch 1, dadurch gekennzeichnet, daß das Schutzmittel in einer Dicke von mindestens 1 mm, vorzugsweise in einer Dicke von mindestens 2,5 mm, aufgetragen wird.

3. Verfahren nach Anspruch 1 oder 2, dadurch gekennzeichnet, daß die Formstücke (7) eine kegelige, pyramidenförmige oder satteldachähnliche Gestalt besitzen.

4. Verfahren nach Anspruch 3, dadurch gekennzeichnet, daß die die Öffnungen des Elements (1) durchdringenden Enden der Formstücke (7) scharfkantig spitz auslaufen.

5. Verfahren nach Anspruch 3 oder 4, dadurch gekennzeichnet, daß die Formstücke (7) aus elastischem, form- und bis mindestens 90°C temperaturbeständigem Kunststoff oder Silikonkautschuk bestehen.

6. Verfahren für Elemente mit insbesondere spaltförmigen Öffnungen nach einem der Ansprüche 3 bis 5, dadurch gekennzeichnet, daß die Formstücke zu ein- und/oder mehrstückigen zahnstangenähnlichen Leisten (6) zusammengefaßt sind.

7. Verfahren nach einem der Ansprüche 3 bis 6, gekennzeichnet durch einen das Element (1) einschließenden und dieses überragenden, insbesondere teilbaren Rahmen.

8. Verfahren nach einem der Ansprüche 3 bis 7, dadurch gekennzeichnet, daß die Formstücke (7) bzw. die Leisten (6) an ihren Seitenflächen und/oder Unterseiten das Entformen erleichternde Aussparungen, insbesondere schwalbenschwanzförmige, hinterschnittene Nuten (10) aufweisen.

9. Siebelement, hergestellt nach dem Verfahren gemäß Anspruch 1, dadurch gekennzeichnet, daß das zu schützende Element (1) eine Vielzahl von parallel verlaufenden, Spalten zwischen sich bildenden Profildrähten (2) oder -stäben mit trapezähnlichem Querschnitt aufweist, die über Querstege (3) miteinander verbunden, insbesondere verschweißt sind.

## Claims

1. A method for the coating of components with a plurality of apertures for the sorting, grading and/or separation of goods, in which one or more layers of an adhesive agent in the first instance followed by a protective agent are applied to a surface of the component, which has previously been cleaned, the apertures being closed by shaped members, wherein the apertures of the component (1) are only closed by the shaped members (7) after the application of the adhesive agent in such a way that the shaped members are inserted from the side of the component opposite to the working surface to be protected and pass through the apertures of the component, and such that the protective agent is only applied to the working surface of the component (1) to be protected and has a thickness which is lower than corresponds to the projecting height of the shaped members (7), characterised in that the angle of inclination (13) of the mould face (11, 12) coming to rest in the associated aperture of the component (1) is in each case greater than the angle (14) of the component surface (15) limiting the aperture, wherein the mould face (11, 12) rests in a linear and sealed manner on the upper edge of the aperture.

2. A method as claimed in claim 1, characterised in that the protective agent is applied to a thickness of at least 1 mm, and preferably to a thickness of at least 2.5 mm.

3. A method as claimed in claim 1 or 2, characterised in that the shaped members (7) have a conical, pyramidal or gable roof shape.

4. A method as claimed in claim 1 or 2, characterised in taht the ends of the shaped members (7) passing through the apertures of the component (1) extend in a sharp-edged and pointed manner.

5. A method as claimed in claim 3 or 4, characterised in that the shaped members (7) consist fo resilient plastics or silicone rubber which retains a stable shape and is resistant to temperatures of up to at least 90°C.

6. A method for components in particular with slit-shaped apertures as claimed in one of claims 3 to 5, characterised in that the shaped members are combined into rack-shaped strips (6) having one and/or more sections.

7. A method as claimed in one of claims 3 to 6, characterised by a frame which is in particular divisible and surrounds the component (1) and projects therebeyond.

8. A method as claimed in one of claims 3 to 7, characterised in that the shaped members (7) and the strips (6) have recesses on their lateral and/or lower surfaces which facilitate unmoulding, these recesses being in particular dovetailed, undercut grooves (10).

9. A sieve component, produced in accordance with the method as claimed in claim 1, characterised in that the component (1) to be protected comprises a plurality of profiled wires (2) or rods having a trapezoidal cross-section which extend parallel to one another and form gaps between one another, which wires or rods are connected together, in particular by welding, via transverse ribs (3).

## Revendications

1. Procédé d'enduction d'éléments avec une pluralité d'ouvertures pour le triage, le classement et/ou la séparation de matériaux dans lequel on applique sur la surface de l' élément, qui est auparavant nettoyée, d'abord un agent d'accrochage et ensuite un agent de protection en une ou plusieurs couches, les ouvertures étant obturées par des pièces de forme, les ouvertures de l'élément (1) étant obturées par les pièces de forme (7) seulement après application de l'agent d'accrochage de telle manière que les pièces de forme sont insérées en les traversant dans les ouvertures de l' élément par la face de l'élément opposée à la surface de travail à protéger, l'agent de protection étant déposé seulement sur la surface de travail de l'élément (1) à protéger et avec une épaisseur inférieure à celle correspondant à la hauteur saillante des pièces de forme (7), caractérisé par le fait que respectivement l'angle d'inclinaison (13) de la surface de forme (11, 12) venant se loger dans l'ouverture correspondante de l'élément (1) est supérieur à celui de la surface d'élément (15) limitant l'ouverture, la surface de forme (11, 12) venant se loger en forme de ligne et de manière étanche contre l'arête supérieure de l'ouverture.

2. Procédé selon la revendication 1, caractérisé par le fait que l'agent de protection est appliqué avec une épaisseur d'au moins 1 mm, de préférence avec une épaisseur d'au moins 2,5 mm.

3. Procédé selon l'une des revendications 1 et 2, caractérisé par le fait que les pièces de forme (7) ont une forme conique, pyramidale ou analogue à une toiture à deux versants.

4. Procédé selon la revendication 3, caractérisé par le fait que les extrémités de la pièce de forme (7) traversant les ouvertures de l'élément (1) ont une forme pointue à bords effilés.

5. Procédé selon l'une des revendications 3 et 4, caractérisé par le fait que les pièces de forme (7) sont constituées d'une matière synthétique élastique ou de caoutchouc siliconé résistant à la déformation et à une température d'au moins 90°C.

6. Procédé pour des éléments avec des ouvertures particulièrement en forme de fentes selon l'une des revendications 3 à 5, caractérisé par le fait que les pièces de forme sont réunies en baguettes (6) en une seule et/ou plusieurs pièces en forme de crémaillère.

7. Procédé selon l'une des revendications 1 à 6, caractérisé par un cadre en particulier divisible enfermant l'élément (1) et en saillie au-dessus de lui.

8. Procédé selon l'une des revendications 3 à 7, caractérisé par le fait que les pièces de formes (7) ou baguettes (6) présentent sur leurs faces latérales et/ou leurs faces inférieures des évidements, en particulier des rainures (10) en queue d'aronde en contre-dépouille.

9. Elément de crible, fabriqué par le procédé selon la revendication 1, caractérisé par le fait que l'élément (1) à protéger présente une pluralité de fils métalliques (2) ou de barres profilés à section trapézoïdale s'étendant parallèlement et formant entre eux des fentes, qui sont reliés entre eux, en particulier soudés, par des entretoises transversales (3).

Figur 1

Figur 2

Figur 3

Figur 4